(19) Europäisches Patentamt
European Patent Office
Office européen des brevets

(11) **EP 4 086 003 A1**

(12) **EUROPEAN PATENT APPLICATION**
published in accordance with Art. 153(4) EPC

(43) Date of publication:
**09.11.2022 Bulletin 2022/45**

(21) Application number: **21753986.5**

(22) Date of filing: **15.01.2021**

(51) International Patent Classification (IPC):
*B03C 3/016* (2006.01)     *B01D 50/00* (2022.01)
*B01D 51/08* (2006.01)     *B03C 3/00* (2006.01)
*B03C 3/011* (2006.01)     *B03C 3/019* (2006.01)
*B03C 3/155* (2006.01)

(52) Cooperative Patent Classification (CPC):
**B01D 50/00; B01D 51/08; B03C 3/00; B03C 3/011; B03C 3/016; B03C 3/019; B03C 3/155**

(86) International application number:
**PCT/JP2021/001227**

(87) International publication number:
**WO 2021/161715 (19.08.2021 Gazette 2021/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.02.2020 JP 2020021230**

(71) Applicant: **Sony Group Corporation**
**Minato-Ku, Tokyo, 108-0075 (JP)**

(72) Inventors:
• **TABATA Seiichiro**
  **Tokyo 108-0075 (JP)**
• **VAN DEN BERG Jan Jasper**
  **1015 Lausanne (CH)**
• **BEARD Tim**
  **London SE193HF (GB)**

(74) Representative: **D Young & Co LLP**
**120 Holborn**
**London EC1N 2DY (GB)**

(54) **PARTICLE TRAPPING SYSTEM AND PARTICLE TRAPPING METHOD**

(57)    Provided is a particle capturing system and a particle capturing system capable of capturing even small particles to be captured in a gas phase.

The particle capturing system according to the present technology includes: an acoustic aggregation device that aggregates particles to be captured in a gas phase by applying sound waves to the particles to be captured; and an aggregate capturing device that charges particle aggregates obtained by aggregating the particles to be captured in the gas phase and captures the particle aggregates with an electrostatic force.

Fig. 1

EP 4 086 003 A1

# Description

[Technical Field]

The technology according to the present disclosure (hereinafter, also referred to as the "present technology") relates to a particle capturing system and a particle capturing method. More specifically, the present technology relates to a particle capturing system that captures particles to be captured in a gas phase, and a particle capturing method thereof.

[Background Art]

Conventionally, air purifiers built into air cleaners, air conditioners, and the like are known, for example.

Conventional air purifiers include a device that charges particles to be captured in a gas phase and captures the charged particles to be captured using a grounded metal fiber filter (for example, refer to PTL 1).

[Citation List]

[Patent Literature]

[PTL 1]
JP 2016-2545 A

[Summary]

[Technical Problem]

However, with the conventional air purifiers, there is a problem that it is difficult to capture smaller particles to be captured in a gas phase.

Consequently, a main object of the present technology is to provide a particle capturing system capable of capturing even small particles to be captured in a gas phase, and a particle capturing method.

[Solution to Problem]

The present technology provides a particle capturing system including: an acoustic aggregation device that aggregates particles to be captured in a gas phase by applying sound waves to the particles to be captured; and an aggregate capturing device that charges particle aggregates obtained by aggregating the particles to be captured in a gas phase and captures the particle aggregates with an electrostatic force.

The aggregate capturing device may include: a charging unit that charges the particle aggregates in a gas phase; and an electric field generator that generates an electric field that changes a trajectory of the charged particle aggregates in the gas phase.

The particle capturing system may further include: a pre-filter that captures particles larger than the particles to be captured in the gas phase before the sound waves are applied to the particles to be captured.

The particle capturing system may further include: a subsequent-stage filter that captures particles in the gas phase which have not been captured by the aggregate capturing device.

The particle capturing system may further include: a particle size measurement device that measures a size of the particles to be captured in the gas phase; and a control device that controls acoustic parameters of the acoustic aggregation device based on a measurement result in the particle size measurement device. The particle capturing system may further include: an aggregate size measurement device that measures a size of the particle aggregates in the gas phase; and a control device that controls charging parameters of the aggregate capturing device based on a measurement result in the aggregate size measurement device.

The particle capturing system may further include: an aggregate size measurement device that measures a size of the particle aggregates in the gas phase; and a control device that controls an electric field generated by the aggregate capturing device based on a measurement result in the aggregate size measurement device.

The acoustic aggregation device may include: a chamber; and a sound wave transmission unit that transmits sound waves to the particles to be captured in the gas phase in the chamber.

The particles to be captured may be nanoparticles. In addition, the particles to be captured may be particles obtained by aggregating volatile organic compounds (VOCs) or may be particles obtained by aggregating semi-volatile organic compounds (SVOCs).

The pre-filter may be a porous filter.

The pre-filter may be a filter containing a porous material.

The pre-filter may be a fibrous filter.

The rear-stage filter may be a filter containing a porous material.

The rear-stage filter may be an activated carbon filter.

The present technology also provides a device including the particle capturing system.

The present technology provides a particle capturing method including: a step of acoustically aggregating particles to be captured in a gas phase; a step of charging particle aggregates obtained by aggregating the particles to be captured in the gas phase; and a step of capturing the charged particle aggregates in the gas phase with an electrostatic force.

The capturing step with the electrostatic force may include: a step of charging the particle aggregates in the gas phase, and a step of generating an electric field that changes an orbital of the charged particle aggregates in the gas phase.

The particle capturing method may further include: a step of capturing particles larger than the particles to be captured in the gas phase before the acoustic aggregation step.

The particle capturing method may further include: a step of capturing particles other than the particle aggregates in the gas phase after the capturing step with the electrostatic force.

The particle capturing method may further include: before the acoustic aggregation step, a step of measuring a size of the particles in the gas phase; and a step of adjusting acoustic parameters of the acoustic aggregation based on a measurement result in the measurement step, in which, in the acoustic aggregation step, the acoustic aggregation may be performed with the adjusted acoustic parameters.

The particle capturing method may further include: before the charging step, a step of measuring a size of the particle aggregates in the gas phase; and a step of adjusting charging parameters of the charging based on a measurement result in the measurement step, in which, in the charging step, the charging may be performed with the adjusted charging parameters.

The particle capturing method may further include: before the charging step, a step of measuring a size of the particle aggregates in the gas phase; and a step of adjusting parameters of an electric field in which the electrostatic force is generated, based on a measurement result in the measurement step, in which, in the capturing step with the electrostatic force, the particle aggregates charged with the adjusted parameters of the electric field may be captured.

[Brief Description of Drawings]

[Fig. 1]

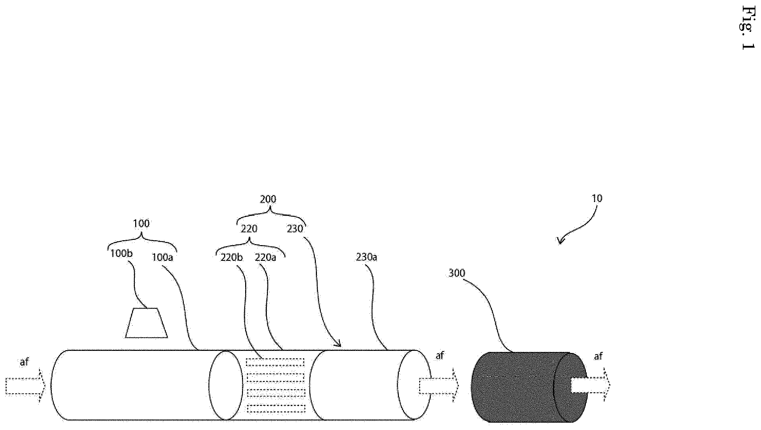

Fig. 1 is a view schematically illustrating a configuration example of an air purification system according to a first embodiment of the present technology.
[Fig. 2]

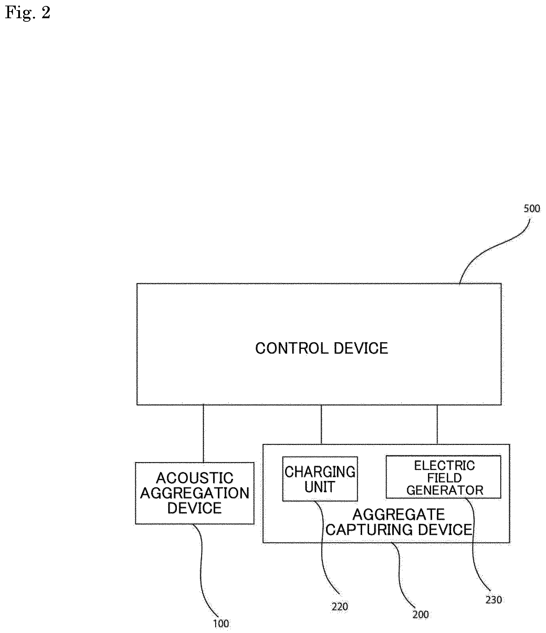

Fig. 2 is a block diagram illustrating an example of a function of the air purification system according to the first embodiment of the present technology.
[Fig. 3]

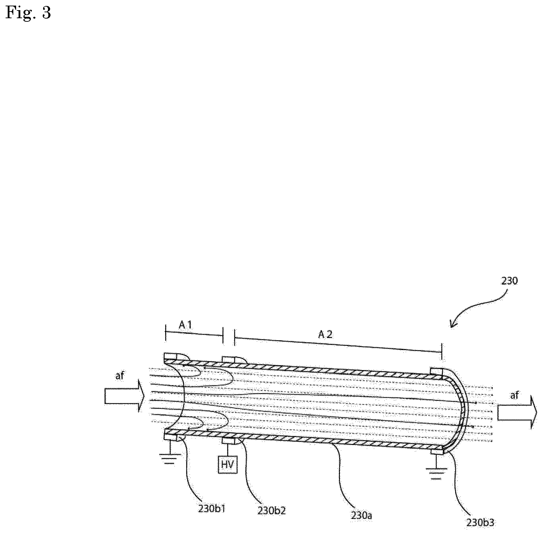

Fig. 3 is a view illustrating a configuration example of an electric field generator of the air purification system according to the first embodiment of the present technology.
[Fig. 4]

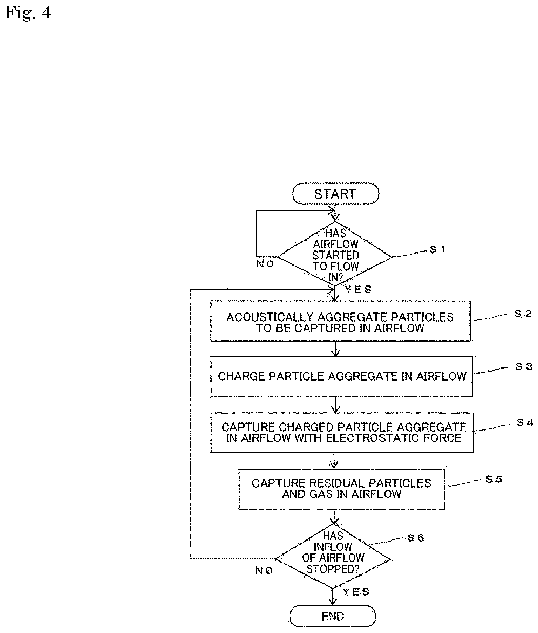

Fig. 4 is a flowchart for illustrating an example of an operation of the air purification system according to the first embodiment of the present technology.
[Fig. 5]

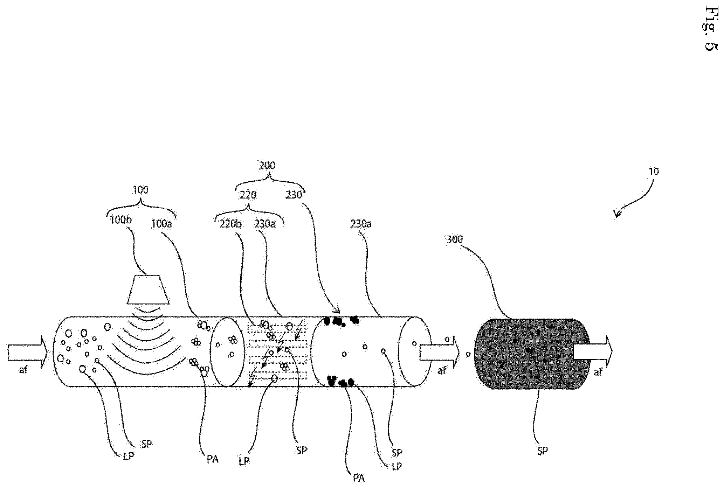

Fig. 5 is a view illustrating an example of an operation state of the air purification system according to the first embodiment of the present technology.
[Fig. 6]

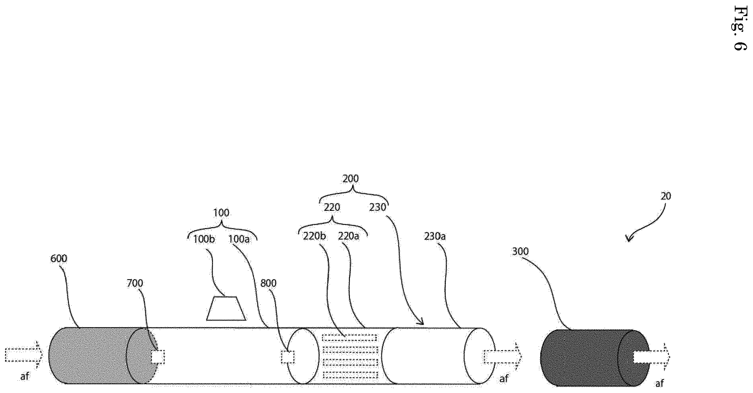

Fig. 6 is a view schematically illustrating a configuration example of an air purification system according to a second embodiment of the present technology.
[Fig. 7]

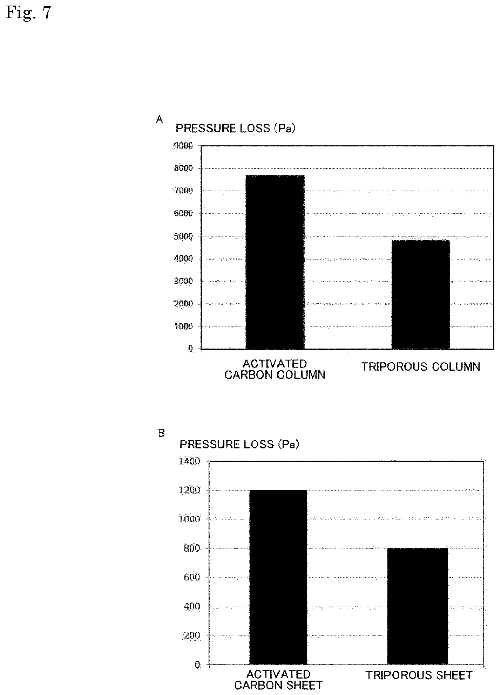

Fig. 7A is a view illustrating pressure losses of an activated carbon column and a triporous column. Fig. 7B is a view illustrating pressure losses of an activated carbon sheet and a triporous sheet.
[Fig. 8]

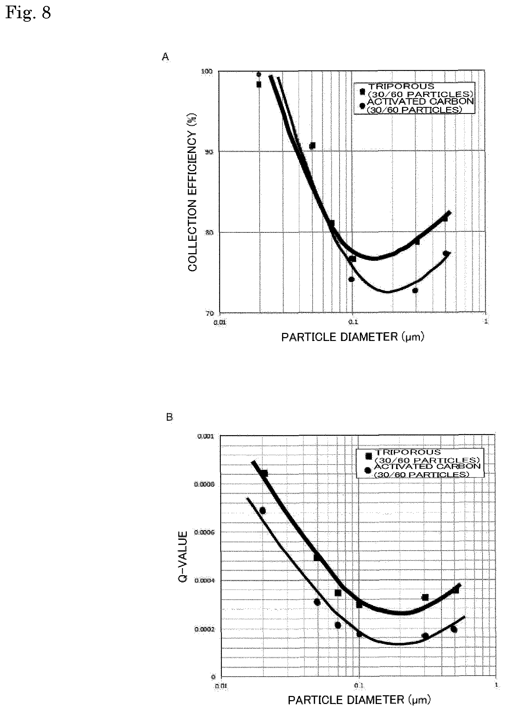

Fig. 8A is a graph illustrating a relationship between collection efficiency and a particle diameter of a triporous column and an activated carbon column. Fig. 8B is a graph illustrating a relationship between a Q-value and a particle diameter of a triporous column and an activated carbon column.
[Fig. 9]

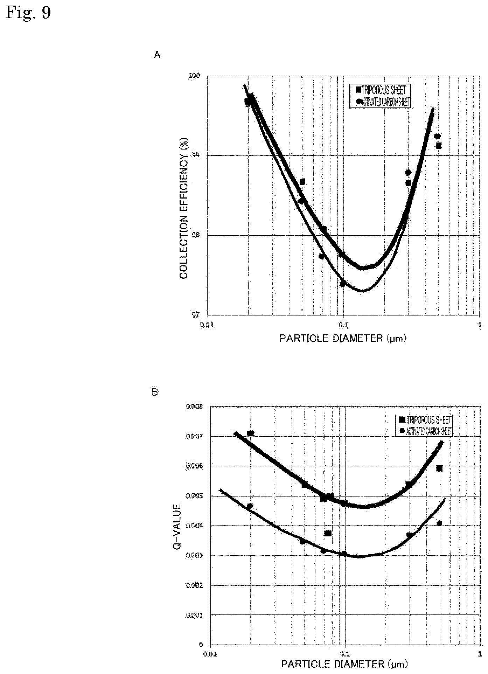

Fig. 9A is a graph illustrating a relationship between collection efficiency and a particle diameter of a triporous sheet and an activated carbon sheet. Fig. 9B is a graph illustrating a relationship between a Q-value and a particle diameter of a triporous sheet and an activated carbon sheet.
[Fig. 10]

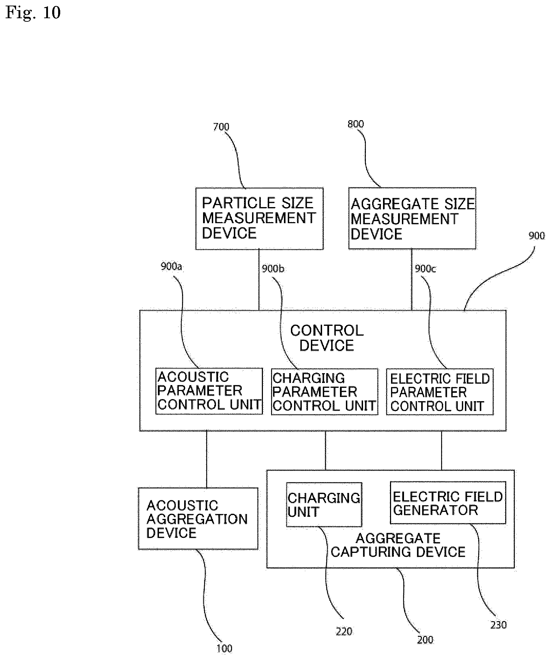

Fig. 10 is a block diagram illustrating an example of a function of the air purification system according to the second embodiment of the present technology.
[Fig. 11]

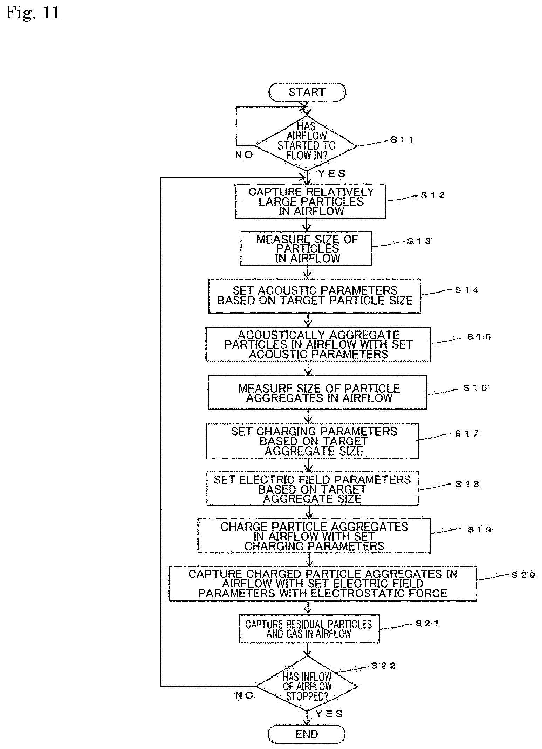

Fig. 11 is a flowchart for illustrating an operation of the air purification system according to the second embodiment of the present technology.
[Fig. 12]

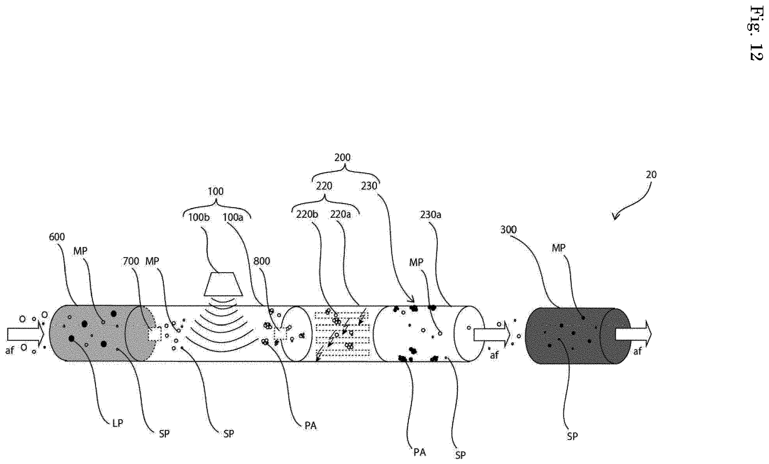

Fig. 12 is a view illustrating an example of an operation state of the air purification system according to the second embodiment of the present technology.

[Description of Embodiments]

Preferred embodiments of the present technology will be described in detail with reference to the accompanying drawings below. In the present specification and the drawings, components having substantially the same functional configuration will be denoted by the same reference numerals, and thus repeated descriptions thereof will be omitted. The embodiments to be described below show a representative embodiment of the present technology, and the scope of the present technology should not be narrowly instructed based on this. Even in a case where it is described in the present specification that each of a particle capturing system and a particle capturing method according to the present technology exhibits a plurality of effects, each of the particle capturing system and the particle capturing method according to the present technology may exhibit at least one effect. The effects described in the present specification are merely exemplary and are not limited, and other effects may be obtained.

In addition, the embodiments will be described in the following order.

1. Introduction

2. Configuration of Air Purification System According to First Embodiment of Present Technology

3. Operation of Air Purification System According to First Embodiment of Present Technology

4. Effects of Air Purification System According to First Embodiment of Present Technology

5. Configuration of Air Purification System According to Second Embodiment of Present Technology

6. Operation of Air Purification System According to Second Embodiment of Present Technology

7. Effects of Air Purification System According to Second Embodiment of Present Technology

8. Modification Example of Present Technology

1. <Introduction>

Conventionally, filters for capturing particles have been used in electronic devices such as air cleaners, air conditioners, and refrigerators, for example. Regarding such filters, fibrous filters that filter air to remove particles (for example, a high efficiency particulate air (HEPA) filter and an ultra low penetration air (ULPA) filter), porous filters, and filters such as activated carbon filters capable of adsorbing a gas are mainly used.

However, there are fine particles (for example, nanoparticles) in air that cannot be completely removed by these filters alone so that there is a concern that these will affect a living body (for example, a human body).

Therefore, after extensive studies, the present inventors of this technology have developed a particle capturing system capable of removing even fine particles which cannot be completely removed by only the above-described filters and may affect a living body.

Hereinafter, an air purification system as an application example of the particle capturing system according to the present technology will be described.

2. <Configuration of Air Purification System According to First Embodiment of Present Technology>

Fig. 1 is a view schematically illustrating a configuration example of an air purification system 10 according to a first embodiment of the present technology. The air purification system 10 is mounted, for example, on a device such as an air cleaner, an air conditioner, and a refrigerator. The air purification system 10 is, as shown in Fig. 1, placed on a flow path of airflow af in the above-described device. This airflow af is generated by a fan or the like built into the above-described device, flows in from an air intake port of the above-described device, is subjected to, for example, predetermined processing such as heat exchange processing in the above-described device, and then flows out of an air discharge port of the above-described device.

The air purification system 10 includes an acoustic aggregation device 100 and an aggregate capturing device 200.

In the air purification system 10, the acoustic aggregation device 100 and the aggregate capturing device 200 are arranged side by side in this order from upstream to downstream of the flow path of the above-described airflow af.

The air purification system 10 further includes a main filter 300 (rear-stage filter) that captures a gas and particles (for example, nanoparticles) in the airflow af which have not been captured by the aggregate capturing device 200.

The main filter 300 is placed as a stage subsequent to the aggregate capturing device 200 (at a position on the downstream side of the aggregate capturing device 200 on the flow path of the airflow af).

Examples of filters used as the main filter 300 include a fibrous filter, a porous filter, an activated carbon filter, and a triporous (registered trademark) filter, and in particular, an activated carbon filter, triporous filter, and the like capable of removing not only particles but also a gas are preferable. The triporous filter is a filter containing a porous material, and examples thereof include one made of a naturally derived porous carbon material produced from rice husks and a fibrous filter containing an organic porous material (for example, a porous carbon material). Regarding the porous material of the triporous filter, an inorganic porous material such as a zeolite or silica may be used in addition to an organic porous material. In addition, a drug that reacts with various gases may be impregnated in pores of the above-described porous material.

The air purification system 10 may not have a main filter 300.

In Fig. 1, there is a gap between the aggregate capturing device 200 and the main filter 300, but the gap may not be present.

As shown in Fig. 2, the air purification system 10 further includes a control device 500 that controls the acoustic aggregation device 100 and the aggregate capturing device 200.

The control device 500 has a hardware configuration including, for example, a CPU, a peripheral circuit, and a memory.

Returning to Fig. 1, the acoustic aggregation device 100 aggregates particles to be captured in the airflow af by applying sound waves to the particles to be captured. The acoustic aggregation device 100 acoustically aggregates the particles to be captured in the airflow af. The particles to be captured include, for example, nanoparticles such as aerosol (particles having a size (particle diameter) of 100 nm or less). Most of such nanoparticles are initially electrically neutral and uncharged.

The above-described particles to be captured are not limited to nanoparticles, and may be, for example, particles obtained by aggregating volatile organic compounds (VOCs) or particles obtained by aggregating semi-volatile organic compounds (SVOCs).

The acoustic aggregation device 100 includes: for example, a first chamber 100a into which the airflow af flows; and a sound wave transmission unit 100b that transmits sound waves to the particles to be captured in the airflow af passing through the first chamber 100a.

The first chamber 100a is made of, for example, a cylindrical member, and is placed so that the axial direction substantially coincides with the direction of the airflow af.

The sound wave transmission unit 100b includes, for example, a speaker. The sound wave transmission unit 100b is placed, for example, on the outer circumferential side of the first chamber 100a so that the sound wave transmission direction faces the chamber 100a.

In the acoustic aggregation device 100, as an example, acoustic parameters (such as frequencies and amplitudes of sound waves emitted from the sound wave transmission unit 100b) are set to values suitable for acoustically aggregating, for example, nanoparticles with a particle size (for example, 100 nm or less).

The aggregate capturing device 200 charges particle aggregates in the airflow af and captures them with an electrostatic force.

The aggregate capturing device 200 includes a charging unit 220 that charges the particle aggregates in the airflow af, and an electric field generator 230 that generates an electric field that changes an orbital (advancing direction) of the charged particle aggregates in the airflow af.

The charging unit 220 includes a second chamber 220a into which the airflow af that contains particle aggregates and is emitted from the first chamber 100a flows, and a plurality of discharge lines 220b arranged in the second chamber 220a.

The second chamber 220a is made of, for example, a cylindrical member having the same diameter as that of the first chamber 100a, and is placed so that the axial direction substantially coincides with the direction of the airflow af. An end portion on a downstream side of the first chamber 100a is connected to an end portion on an upstream side of the second chamber 220a, which allows communication between the first chamber 100a and the second chamber 220a. The plurality of discharge lines 220b are arranged so as to extend along the axial direction of the second chamber 220a at intervals in the direction orthogonal to the axial direction, for example.

In the charging unit 220, as an example, charging parameters (for example, a discharge time and a discharge voltage of each of the discharge lines 220b) are set to values suitable for charging, for example, particle aggregates obtained by aggregating nanoparticles.

In general, it is known that the smaller the particles to be captured, the lower the charging efficiency. For this reason, it is much more efficient and reliable to charge the particle aggregates obtained by aggregating nanoparticles than to charge nanoparticles themselves.

The electric field generator 230 includes a third chamber 230a into which the airflow af that contains charged particle aggregates and flows out of the second chamber 220a flows, and a plurality of (for example, three) electrodes 230b (electrodes 230b1, 230b2, and 230b3) (refer to Fig. 3) provided on the outer wall surface of the third chamber 230a.

The third chamber 230a is made of, for example, a cylindrical member having the same diameter as that of the second chamber 220a, and is placed so that the axial direction substantially coincides with the direction of the airflow af. An end portion on a downstream side of the second chamber 220a is connected to an end portion on an upstream side of the third chamber 230a, which allows communication between the second chamber 220a and the third chamber 230a. At least the outer wall surface of the third chamber 230a is made of an insulating material.

Each of the electrodes 230b is, as an example, a ring-shaped electrode coaxially provided so as to surround the outer wall surface of the third chamber 230a.

The electrodes 230b1, 230b2, and 230b3 are arranged in this order from upstream to downstream of the flow path of the airflow af.

Hereinafter, among the three electrodes 230b1, 230b2, and 230b3, the furthest upstream electrode 230b1 is also called an upstream electrode 230b1, the furthest downstream electrode 230b3 is also called a downstream electrode 230b3, and the intermediate electrode 230b2 is also called an intermediate electrode 230b2.

A high potential HV is applied to the intermediate electrode 230b2, and the upstream electrode 230b1 and the downstream electrode 230b3 are grounded.

In this state, a strong electric field is generated from the intermediate electrode 230b2 toward the upstream electrode 230b1 in an area A1 between the intermediate electrode 230b2 and the upstream electrode 230b1, and a strong electric field is generated from the intermediate electrode 230b2 toward the downstream electrode 230b3 in an area A2 between the intermediate electrode 230b2 and the downstream electrode 230b3. The length of the area A2 (the distance between the electrode 230b2 and the electrode 230b3) is sufficiently longer than the length of the area A1 (the distance between the electrode 230b2 and the electrode 230b1). The length ratio of the area A1 to the area A2 can be appropriately changed.

Positively charged particles and particle aggregates contained in the airflow af flowing into the third chamber 230a stall in the area A1 due to an electrostatic force received in the direction opposite to the direction of the airflow af, an orbit (advancing direction) thereof is changed, and they are captured at a site close to the upstream electrode 230b1 on the inner wall surface of the third chamber 230a.

On the other hand, negatively charged particles and particle aggregates contained in the airflow af flowing into the third chamber 230a are temporarily accelerated in the area 1 due to an electrostatic force received in the same direction as that of the airflow af but stall in the area A2 due to the electrostatic force received in the direction opposite to the direction of the airflow af, an orbit (advancing direction) thereof is changed, and they are captured at a site close to the downstream electrode 230b3 on the inner wall surface of the third chamber 230a.

3. <Operation of Air Purification System According to First Embodiment of Present Technology>

Hereinafter, an operation of the air purification system 10 according to the first embodiment of the present technology, that is, an air purification method in which the air purification system 10 according to the first embodiment, is used will be described with reference to Fig. 5 (a view illustrating an example of an operation state of the air purification system 10) and a flowchart of Fig. 4.

In the first Step S1, the control device 500 determines whether or not the airflow af has started to flow into the air purification system 10. The determination here is affirmed when a device equipped with the air purification system 10 starts to operate. When the device starts to operate, the airflow af starts to flow into the first chamber 100a and a start trigger signal is transmitted from a main controller of the device to the control device 500. When the control device 500 receives the start trigger signal, the acoustic aggregation device 100 and the aggregate capturing device 200 start to operate. That is, when the control device 500 receives the start trigger signal, the acoustic aggregation device 100 transmits sound waves from the sound wave transmission unit 100b to the first chamber 100a, the charging unit 220 discharges from the discharge lines 220b in the second chamber 220a, and the electric field generator 230 generates an electric field in the area A1 between the electrodes 230b2 and 230b 1 and in the area A2 between the electrodes 230b2 and the 230b3. When the determination in Step S1 is affirmed, the process proceeds to Step S2, and when the determination in Step S1 is denied, the same determination is made again.

In the next Step S2, the acoustic aggregation device 100 acoustically aggregates particles (for example, particles LP and SP in Fig. 5) to be captured in the airflow af. In the example of Fig. 5, among the particles to be captured, relatively large particles are set to particles LP and relatively small particles are set to particles SP. Specifically, the acoustic aggregation device 100 performs acoustic aggregation by applying sound waves to the particles to be captured in the airflow af flowing into the first chamber 100a. The airflow af containing the acoustically aggregated particle aggregates PA flows into the second chamber 220a.

In the next Step S3, the charging unit 220 charges the particle aggregates PA in the airflow af. Specifically, the charging unit 220 charges the particle aggregates PA by discharging from each of the discharge lines 220b with respect to the particle aggregates PA in the airflow af flowing into the second chamber 220a. The airflow af containing the charged particle aggregates PA flows into the third chamber 230a.

In the example of Fig. 5, the relatively large particles LP are sufficiently charged separately.

In the next Step S4, the electric field generator 230 captures the charged particle aggregates PA in the airflow af with an electrostatic force. Specifically, when an electric field is generated between the electrodes 230b2 and 230b1 and between the electrodes 230b2 and 230b3, the aggregate capturing device 200 captures the charged particle aggregates PA contained in the airflow af flowing into the third chamber 230a on the inner wall surface of the third chamber 230a by applying an electrostatic force to the particle aggregates PA.

In Fig. 5, the particles LP and the particle aggregates PA captured on the inner wall surface of the third chamber 230a are shown in black.

In the example of Fig. 5, the relatively large particles LP are sufficiently charged and are captured separately on the inner wall surface of the third chamber 230a.

In the next Step S5, residual particles in the airflow af are captured by the main filter 300. In the example of Fig. 5, the particles SP captured by the main filter 300 are shown in black.

As a result, a clean airflow af from which particles to be captured and a gas are removed flows out of the main filter 300.

In the next Step S6, it is determined whether or not the inflow of an airflow has stopped. The determination here is affirmed when the operation of the device equipped with the air purification system 10 has stopped. When the operation of the device has stopped, the inflow of the airflow into the first chamber 100a stops and a stop trigger signal is transmitted from the main controller of the device to the control device 500. When the control device 500 receives the stop trigger signal, it stops the operations of the acoustic aggregation device 100 and the aggregate capturing device 200. When the determination in Step S6 is affirmed, the flow ends, and when the determination in Step S6 is denied, the process returns to Step S2.

As described above, the air purification system 10 repeats a series of Steps S2 to S5 during the inflow of the airflow af.

4. <Effects of Air Purification System According to First Embodiment of Present Technology>

The air purification system 10 according to the first embodiment of the present technology includes: the acoustic aggregation device 100 that aggregates particles to be captured in the airflow af by applying sound waves to the particles to be captured; and the aggregate capturing device 200 that charges particle aggregates obtained by aggregating the particles to be captured in the airflow af and captures the particle aggregates with an electrostatic force.

Accordingly, since the particles to be captured in the airflow af are aggregated into larger particle aggregates with good charging efficiency, the particle aggregates can be efficiently charged and captured more reliably with an electrostatic force.

As a result, according to the air purification system 10, even small particles to be captured in the airflow can be captured.

On the other hand, in the conventional air purifier, since particles to be captured are charged as they are with a size of each particle without aggregation, it was difficult to capture small ones having poor charging efficiency among the particles to be captured.

In addition, the aggregate capturing device 200 includes the charging unit 220 that charges the particle aggregates in the airflow, and the electric field generator 230 that generates an electric field that changes an orbital of the charged particle aggregates in the airflow. Accordingly, the charged particles in the airflow af can be captured at low cost with almost no pressure loss.

On the other hand, in a case where, for example, an electric dust collector (a device in which charging and generation of an electric field are performed at the same site) is used as the aggregate capturing device 200, it is difficult to reduce the cost.

In addition, the air purification system 10 according to the present technology further includes a main filter 300 (rear-stage filter) that captures particles in the airflow af which have not been captured by the aggregate capturing device 200. Accordingly, the particles that could not be completely captured by the aggregate capturing device 200 can be captured, and a cleaner airflow can be made to flow out.

The acoustic aggregation device 100 may include: a first chamber 100a into which the airflow af flows; and a sound wave transmission unit 100b that transmits sound waves to the particles to be captured in the airflow af passing through the first chamber 100a. Accordingly, sound waves can be efficiently applied to the particles to be captured in the airflow af, and efficient acoustic aggregation can be performed on the particles to be captured in the airflow af.

The particles to be captured are, for example, nanoparticles. Accordingly, it is possible to capture nanoparticles that may affect a living body (for example, a human body).

The main filter 300 (rear-stage filter) may be a triporous filter or an activated carbon filter. Accordingly, it is possible to capture (adsorb) not only the particles to be captured but also a gas.

According to the device including the air purification system 10 according to the first embodiment of the present technology, since smaller particles to be captured can be captured by the air purification system 10, very clean air can be discharged.

As a result, according to the device including the air purification system 10, a device that is more friendly to a living body (for example, a human body) can be realized.

The air purification method according to the first embodiment of the present technology includes: a step of acoustically aggregating particles to be captured in an airflow af; and a step of charging particle aggregates obtained by aggregating the particles to be captured in the airflow af to capture the particle aggregates with an electrostatic force.

Accordingly, since the particles to be captured in the airflow af are aggregated into larger particle aggregates with good charging efficiency, the particle aggregates can be efficiently charged and captured reliably with an electrostatic force.

As a result, in the air purification method in which the air purification system 10 according to the first embodiment is used, even small particles to be captured in the airflow can be captured.

The air purification method according to the first embodiment of the present technology further includes a step of capturing particles other than the particle aggregates in the airflow af after the capturing step with the electrostatic force. Accordingly, particles that could not be completely captured in the capturing step can be captured, and a cleaner airflow can be made to flow out.

5. <Configuration of Air Purification System According to Second Embodiment of Present Technology>

Hereinafter, an air purification system 20 according to a second embodiment of the present technology will be described.

Fig. 6 is a view schematically illustrating a configuration of the air purification system 20 according to the second embodiment of the present technology.

As shown in Fig. 6, the air purification system 20 includes a pre-filter 600 in front of the acoustic aggregation device 100 in addition to the configuration of the air purification system 10 according to the first embodiment.

That is, the air purification system 20 includes the pre-filter 600, the acoustic aggregation device 100, the aggregate capturing device 200, and the main filter 300.

The pre-filter 600, the acoustic aggregation device 100, the aggregate capturing device 200, and the main filter 300 are arranged side by side in this order from upstream to downstream of the flow path of the airflow af.

In Fig. 6, there is a gap between the aggregate capturing device 200 and the main filter 300, but the gap may not be present.

In the air purification system 20, relatively large particles to be captured contained in the airflow af are captured in advance by the pre-filter 600, relatively small particles to be captured are acoustically aggregated, charged, and captured with an electrostatic force, and remaining particles and gases are captured by the main filter 300.

Hereinafter, the type (material) of filter used for the pre-filter 600 and/or the main filter 300 will be described.

Regarding the pre-filter 600 and the main filter 300, filters such as a fibrous filter, a porous filter, an activated carbon filter, and a triporous filter can be used, for example.

Regarding the fibrous filter used as the pre-filter 600 and/or the main filter 300, a HEPA filter and a ULPA filter are suitable, for example. While such a fibrous filter has excellent properties for capturing (collecting) particles such as nanoparticles in the airflow, it is difficult to capture a gas in the airflow. Accordingly, the fibrous filter is more suitable for the pre-filter 600.

In a case of using, for example, fibrous filters (for example, a HEPA filter and a ULPA filter) as the pre-filter 600, whether to use a ULPA filter having a high pressure loss but having excellent collecting properties or a HEPA filter having poor collecting properties but having a low pressure loss may be appropriately selected depending on the setting of various parameters and the performance of the acoustic aggregation device 100, the aggregate capturing device 200, and the main filter 300 arranged on the downstream side of the pre-filter 600. Specifically, in a case where particles to be captured can be sufficiently captured on the downstream side of the pre-filter 600, the HEPA filter having poor collecting properties but having a low pressure loss is preferably used.

On the other hand, in a case where particles to be captured cannot be sufficiently captured on the downstream side of the pre-filter 600, the ULPA filter having a high pressure loss but having excellent collecting properties is preferably used.

Incidentally, in recent years, a porous filter having a porous film (for example, a polystyrene-silica film) in which mesopores (pores having an intermediate size between micropores and macropores) and macropores coexist has been attracting attention. It has been found that in such a porous filter, the collection efficiency of nanoparticles particularly increases as the proportion of the volume of mesopores in the total volume of the pores increases.

Therefore, in a case of using a porous filter as the pre-filter 600 and/or the main filter 300, a porous filter in which mesopores and macropores coexist is preferably used. Regarding the porous filter, one in which the volume of mesopores accounts for 30% or more of the total volume (total volume of all the pores) is more preferably used, one in which the volume of mesopores accounts for 50% or more thereof is still more preferably used, and one in which the volume of mesopores accounts for 70% or more thereof is still more preferably used.

On the other hand, it is difficult for the porous filter to capture a gas in the airflow.

Accordingly, the porous filter is more suitable for the pre-filter 600.

An activated carbon filter has excellent properties for capturing a gas (gas adsorption properties) in the airflow, and although the properties are inferior to those of a fibrous filter, the activated carbon filter also has properties for capturing particles such as nanoparticles (particle capturing properties) in the airflow.

Accordingly, the activated carbon filter is more suitable for the main filter 300.

A filter obtained by introducing activated carbon particles into a fibrous filter is capable of collecting particles and absorbing a gas.

Accordingly, the filter obtained by introducing activated carbon particles into a fibrous filter is more suitable for the main filter 300.

A triporous filter has excellent gas adsorption properties, and although the properties are inferior to those of a fibrous filter, the triporous filter also has particle capturing properties superior to those of an activated carbon filter. Accordingly, the triporous filter is suitable for both the pre-filter 600 and the main filter 300.

Pressure losses (unit: pascal (Pa)) of an activated carbon column (column-shaped activated carbon) and a triporous column (column-shaped triporous) are shown in a graph in Fig. 7A. Pressure losses (unit: pascal (Pa)) of an activated carbon sheet and a triporous sheet are shown in a graph in Fig. 7B. It can be seen from Figs. 7A and 7B that triporous has a significantly low pressure loss and does not have a large resistance to the airflow compared to the activated carbon in the same state even in both cases of the column shape and the sheet shape.

That is, it can be seen that triporous is more suitable for use in the above-described device for allowing an airflow to flow in and out in terms of a pressure loss compared to activated carbon.

A relationship between collection efficiency and a particle diameter of each of a triporous column and an activated carbon column is shown in a graph in Fig. 8A. A relationship between a Q-value (a performance index of a filter) and a particle diameter of each of a triporous column and an activated carbon column is shown in a graph in Fig. 8B.

The Q-value is represented by the following equation.

$$Q = \text{-}\ln E / \Delta P$$

E: Transmittance, $\Delta P$: Pressure loss

Both Figs. 8A and 8B show curves (curves that approximate the plotted data by, for example, a least square method) representing changes in collection efficiency in a range (for example, 20 nm to 500 nm) of particle diameters above and below 100 nm (0.1 pm) which is an upper limit of the particle diameter of nanoparticles. In Figs. 8A and 8B, the data of the triporous column is indicated by ■ (black-panted rectangle) and the data of the activated carbon column is indicated by ● (black-painted circle).

As can be seen from Fig. 8A, although there is no great difference in the collection efficiency (slightly larger in the activated carbon column) between the activated carbon column and the triporous column in a case where the particle diameter of particles to be captured is relatively small, the collection efficiency of the triporous column becomes significantly excellent compared to that of the activated carbon column when the particle diameter of particles to be captured is greater than or equal to a certain value (for example, 70 nm).

As can be seen from Fig. 8B, the Q-value of the triporous column is stable and high compared to that of the activated carbon column regardless of the particle diameter of particles to be captured, and the triporous column has superior performance as a filter.

A relationship between collection efficiency and a particle diameter of each of a triporous sheet and an activated carbon sheet is shown in a graph in Fig. 9A. A relationship between a Q-value (a performance index of a filter) and a particle diameter of each of a triporous column and an activated carbon sheet is shown in a graph in Fig. 9B. Both Figs. 10A and 10B show curves (curves that approximate the plotted data by, for example, a least square method) representing changes in collection efficiency in a range (for example, 20 nm to 500 nm) of particle diameters above and below 100 nm which is an upper limit of the particle diameter of nanoparticles. In Figs. 9A and 9B, the data of the triporous sheet is indicated by ■ (black-panted rectangle) and the data of the activated carbon sheet is indicated by ● (black-painted circle).

As can be seen from Fig. 9A, the triporous sheet has an excellent collection efficiency compared to the activated carbon sheet regardless of the particle diameter of particles to be captured.

As can be seen from Fig. 9B, the Q-value of the triporous sheet is stable and high compared to that of the activated carbon sheet regardless of the particle diameter of particles to be captured, and the triporous sheet has superior performance as a filter.

Returning to Fig. 6, the air purification system 20 includes a particle size measurement device 700 that measures the size of particles (particle size) to be captured in the airflow af having passed through the pre-filter 600.

The particle size measurement device 700 is placed at an upstream end in the first chamber 100a (near the downstream side of the pre-filter 600).

The particle size measurement device 700 measures the particle size (particle diameter) of collected particles to be measured among the particles to be captured in the airflow af, and outputs the measurement results (measurement results for each particle to be measured) to a control device 900 to be described below.

For example, a cascade impactor is used as the particle size measurement device 700.

Hereinafter, the principle of the cascade impactor will be briefly described.

The impactor sends an airflow containing particles from a nozzle to a collecting material and deposits particles on the collecting material using an inertial force. One in which such impactors are provided in series in multiple stages is called a "cascade impactor". In the cascade impactor, particles having different particle diameters among the impactors can be deposited on the collecting material by differentiating the diameters of nozzles of the impactors at each stage.

That is, since the cascade impactor has a structure in which the flow of the airflow is forcibly bent in each impactor, particles can be separated into small particles that can move along the stream line of the airflow and large particles that deviate from the stream line of the airflow and collide with the collecting material.

According to the above-described principle, the cascade impactor can collect particles to be captured in the airflow by size.

A particle counter or a particle size distribution measuring device can also be used in addition to the cascade impactor as the particle size measurement device 700.

The air purification system 20 further includes an aggregate size measurement device 800 that measures the size of particle aggregates (aggregate size) acoustically aggregated in the first chamber 100a. The aggregate size measurement device 800 is placed, for example, at an end portion in the first chamber 100a on the downstream side.

The aggregate size measurement device 800 measures the size (aggregate size) of collected particle aggregates to be measured among the particle aggregates in the airflow af, and outputs the measurement results (measurement results for each particle aggregate to be measured) to the control device 900 to be described below.

For example, a cascade impactor is used as the aggregate size measurement device 800. The cascade impactor can collect particle aggregates in the airflow by size.

A particle counter or a particle size distribution measuring device can also be used in addition to the cascade impactor as the aggregate size measurement device 800.

Fig. 10 is a block diagram illustrating a function of the air purification system 20 according to the second embodiment of the present technology.

As shown in Fig. 10, the air purification system 20 further includes the control device 900 that controls the acoustic aggregation device 100 and the aggregate capturing device 200 based on the measurement results of the particle size measurement device 700.

The control device 900 includes an acoustic parameter control unit 900a, a charging parameter control unit 900b, and an electric field parameter control unit 900c.

The control device 900 has a hardware configuration including, for example, a CPU, a peripheral circuit, and a memory.

The control device 900 does not necessarily have all of the acoustic parameter control unit 900a, the charging parameter control unit 900b, and the electric field parameter control unit 900c, and may have at least one.

For example, in a case where the control device 900 does not have the acoustic parameter control unit 900a, the particle size measurement device 700 may not be provided. For example, in a case where the control device 900 does not have the charging parameter control unit 900b and the electric field parameter control unit 900c, the aggregate size measurement device 800 may not be provided.

The acoustic parameter control unit 900a acquires a target particle size which is a targeted size of particles from, for example, measurement results of the particle size measurement device 700, and sets acoustic parameters (for example, frequencies and amplitudes of sound waves) to suitable values (preferably optimal values) for acoustically aggregating the particles having a target particle size.

It is preferable that a table showing the relationship between a plurality of particle sizes and a plurality of the corresponding acoustic parameters be stored in a memory in advance so that the acoustic parameter control unit 900a reads acoustic parameters corresponding to a target particle size from the memory at all times.

The charging parameter control unit 900b acquires a target aggregate size which is a targeted size of aggregates from, for example, measurement results of the aggregate size measurement device 800, and sets charging parameters (for example, a discharge voltage and a discharge time) to values that can sufficiently charge the aggregates having a target aggregate size.

A table showing the relationship between a plurality of aggregate sizes and a plurality of the corresponding charging parameters may be stored in a memory in advance so that the charging parameter control unit 900b reads charging parameters corresponding to a target aggregate size from the memory at all times.

The electric field parameter control unit 900c acquires a target aggregate size which is a targeted size of aggregates from, for example, measurement results of the aggregate size measurement device 800, and sets electric field parameters (for example, the strength of an electric field) to values that generates a sufficient electrostatic force to capture charged particle aggregates having a target aggregate size.

6. <Operation of Air Purification System According to Second Embodiment of Present Technology>

Hereinafter, an operation of the air purification system 20 according to the second embodiment of the present technology and an air purification method in which the air purification system 20 according to the second embodiment is used will be described with reference to Fig. 12 (a view illustrating an example of an operation state of the air purification system 20) and a flowchart of Fig. 11.

In the first Step S11, the control device 900 determines whether or not the airflow has started to flow into the air purification system 20. The determination here is affirmed when a device equipped with the air purification system 20 starts to operate. When the device starts to operate, the airflow af starts to flow into the pre-filter 600 and a start trigger signal is transmitted from a main controller of the device to the control device 900. When the control device 900 receives the start trigger signal, the acoustic aggregation device 100 and the aggregate capturing device 200 start to operate. That is, when the control device 900 receives the start trigger signal, the acoustic aggregation device 100 transmits sound waves from the sound wave transmission unit 100b to the first chamber 100a, the charging unit 220 discharges from each of the discharge lines 220b in the second chamber 220a, and the electric field generator 230 generates an electric field in the area between the electrodes 230b2 and 230b1 and in the area between the electrodes 230b2 and the 230b3 which are all provided in the third chamber 230a. When the determination in Step S11 is affirmed, the process proceeds to Step S12, and when the determination in Step S11 is denied, the same determination is made again.

In the next Step S12, relatively large particles LP (represented by ● (black-painted circle) in the pre-filter 600 of Fig. 12) among the particles to be captured in the airflow af are captured by the pre-filter 600. The airflow af having passed through the pre-filter 600 flows into the first chamber 100a.

In the example of Fig. 12, among the particles to be captured, relatively small particles are set to particles SP and intermediate particles are set to particles MP.

In the next Step S13, the particle size measurement device 700 measures the size of the particles (for example, particles MP and SP in Fig. 12) in the airflow af flowing into the first chamber 100a and outputs the measurement results to the control device 900.

In the next Step S14, the acoustic parameter control unit 900a sets acoustic parameters based on a target particle size. Specifically, the acoustic parameter control unit 900a acquires target particle sizes (for example, an average particle size, a minimum particle size, and a maximum particle size) which are targeted sizes of particles from measurement results of the particle size measurement device 700, and sets acoustic parameters (for example, frequencies and amplitudes of sound waves) based on the target particle sizes.

In the next Step S15, the acoustic aggregation device 100 acoustically aggregates the particles in the airflow af flowing into the first chamber 100a with the set acoustic parameters. Specifically, the acoustic aggregation device 100 performs acoustic aggregation by applying sound waves to the particles (particles MP and SP in Fig. 5) to be captured in the airflow af flowing into the first chamber 100a.

In the next Step S16, the aggregate size measurement device 800 measures the size of the particle aggregates in the airflow af flowing into the first chamber 100a and outputs the measurement results (aggregate sizes) to the control device 900. The airflow af which contains the acoustically aggregated particle aggregates PA and has flown out from the first chamber 100a flows into the second chamber 220a.

In the next Step S17, the charging parameter control unit 900b sets charging parameters based on a target aggregate size. Specifically, the charging parameter control unit 900b acquires a target aggregate size (for example, an average aggregate size, a minimum aggregate size, and a maximum aggregate size) which is a targeted size of aggregates from measurement results of the aggregate size measurement device 800, and sets charging parameters (for example, a discharge time and a discharge voltage of each discharge line 220b) based on a target aggregate size.

In the next Step S18, the electric field parameter control unit 900c sets electric field parameters based on a target aggregate size. Specifically, the electric field parameter control unit 900c acquires a target aggregate size (for example, an average aggregate size, a minimum aggregate size, and a maximum aggregate size) which is a targeted size of aggregates from measurement results of the aggregate size measurement device 800, and sets electric field parameters (for example, the strength of an electric field) based on a target aggregate size.

In the next Step S19, the charging unit 220 charges the particle aggregates PA in the airflow af flowing into the second chamber 220a with the set charging parameters. Specifically, the charging unit 220 charges the particle aggregates PA by discharging with respect to the particle aggregates in the airflow af flowing into the second chamber 220a. The airflow af containing the charged particle aggregates PA flows into the third chamber 230a.

In the next Step S20, the electric field generator 230 generates an electric field with the set electric field parameters to capture the charged particle aggregates PA in the airflow af with an electrostatic force. Specifically, when an electric field is generated between the electrodes 230b2 and 230b1 and between the electrodes 230b2 and 230b3, the electric field generator 230 captures the charged particle aggregates PA contained in the airflow af flowing into the third chamber 230a on the inner wall surface of the third chamber 230a by applying an electrostatic force to the particle aggregates PA. The airflow af which contains a gas and residual particles and flows out of the third chamber 230a flows into the main filter 300.

In the next Step S21, residual particles in the airflow af are captured by the main filter 300. As a result, a clean airflow af from which particles to be captured and a gas are removed flows out of the main filter 300.

In the next Step S22, it is determined whether or not the inflow of the airflow af has stopped. The determination here is affirmed when the operation of the device equipped with the air purification system 20 has stopped. When the operation of the device has stopped, a stop trigger signal is transmitted from the main controller of the device to the control device 900. When the control device 900 receives the stop trigger signal, it stops the operations of the acoustic aggregation device 100 and the aggregate capturing device 200. When the determination in Step S22 is affirmed, the flow ends, and when the determination in Step S22 is denied, the process returns to Step S12.

As described above, the air purification system 20 repeats a series of Steps S12 to S21 during the inflow of the airflow af.

For example, in a case where the control device 900 does not have the acoustic parameter control unit 900a, the above-described Steps S13 and S14 may not be necessary. For example, in a case where the control device 900 does not have the charging parameter control unit 900b, the above-described Step S17 may not be necessary. For example, in a case where the control device 900 does not have the electric field parameter control unit 900c, the above-described Step S18 may not be necessary. For example, in a case where the control device 900 does not have the charging parameter control unit 900b and the electric field parameter control unit 900c, the above-described Steps S16, S17, and S18 may not be necessary.

7. <Effects of Air Purification System According to Second Embodiment of Present Technology>

The air purification system 20 according to the second embodiment of the present technology exhibits the following effects in addition to the effects exhibited by the air purification system 10 of the first embodiment.

The air purification system 20 according to the second embodiment of the present technology further includes: a pre-filter 600 that captures particles larger than the particles to be captured in an airflow af before sound waves are applied to the particles to be captured. Accordingly, relatively large particles having a low necessity of acoustic aggregation (which are easily charged) can be removed from the airflow af in advance before the acoustic aggregation, and relatively small particles having a high necessity of acoustic aggregation (which are hardly charged) can be subjected to the acoustic aggregation.

The air purification system 20 further includes: a particle size measurement device 700 that measures a size of the particles in the airflow af; and a control device 900 that controls acoustic parameters of the acoustic aggregation device 100 based on a measurement result in the particle size measurement device 700. Accordingly, the particles to be captured (for example, particles having a target particle size) can be more efficiently subjected to acoustic aggregation.

The air purification system 20 further includes:

an aggregate size measurement device 800 that measures a size of the particle aggregates in the airflow af; and a control device 900 that controls charging parameters of the charging unit 220 based on a measurement result in the aggregate size measurement device 800. Accordingly, the particle aggregates (for example, aggregates having a target aggregate size) can be more efficiently charged.

The air purification system 20 further includes: an aggregate size measurement device 800 that measures a size of the particle aggregates in the airflow af; and a control device 900 that controls an electric field generated by the aggregate capturing device 200 based on a measurement result in the aggregate size measurement device 800. Accordingly, it is possible to generate an electrostatic force capable of efficiently capturing the charged particle aggregates (for example, charged aggregates having a target aggregate size).

In a case where, for example, the pre-filter 600 is a porous filter, relatively large particles (for example, particles larger than nanoparticles) can be captured in advance before being acoustically aggregated.

In a case where, for example, the pre-filter 600 is a triporous filter, not only relatively large particles (for example, particles larger than nanoparticles) but also relatively small particles (for example, nanoparticles) can be captured in advance before being acoustically aggregated.

In a case where, for example, the pre-filter 600 is a fibrous filter, not only relatively large particles (for example, particles larger than nanoparticles) but also relatively small particles (for example, nanoparticles) can be captured in advance before being acoustically aggregated.

In a case where, for example, the main filter 300 (rear-stage filter) is a triporous filter, residual particles can be captured and a gas can be adsorbed while reducing the pressure loss.

In a case where, for example, the main filter 300 (rear-stage filter) is an activated carbon filter, residual particles can be captured and a gas can be adsorbed.

According to the device including the air purification system 20 according to the second embodiment of the present technology, the airflow af can be discharged in a cleaner state using the air purification system 20.

The air purification method in which the air purification system 20 according to the second embodiment of the present technology is used exhibits the following effects in addition to the effects exhibited by the air purification method in which the air purification system 10 of the first embodiment is used.

The air purification method in which the air purification system 20 is used further includes a step of capturing particles larger than the particles to be captured in the airflow af before the acoustic aggregation step. Accordingly, relatively large particles having a low necessity of acoustic aggregation (which are easily charged) can be removed from the airflow af in advance before the acoustic aggregation, and relatively small particles having a high necessity of acoustic aggregation (which are hardly charged) can be subjected to the acoustic aggregation. As a result, the size of particles to be subjected to acoustic aggregation can be narrowed down.

The air purification method in which the air purification system 20 is used includes: before the acoustic aggregation step, a step of measuring a size of the particles to be captured in the airflow af; and a step of adjusting acoustic parameters of the acoustic aggregation based on a measurement result in the measurement step, in which, in the acoustic aggregation step, the acoustic aggregation is performed with the adjusted acoustic parameters. Accordingly, the particles to be captured can be more efficiently subjected to acoustic aggregation.

The air purification method in which the air purification system 20 is used includes: before the acoustic aggregation step, a step of measuring a size of the particle aggregates in the airflow af; and a step of adjusting charging parameters of the charging based on a measurement result in the measurement step, in which, in the acoustic aggregation step, the charging is performed with the adjusted charging parameters. Accordingly, the particle aggregates can be more efficiently charged.

The air purification method in which the air purification system 20 is used further includes: before the charging step, a step of measuring a size of the particles in the airflow af; and a step of adjusting the size of parameters of an electric field in which the electrostatic force is generated, based on a measurement result in the measurement step, in which, in the capturing step with the electrostatic force, the particle aggregates charged with the adjusted parameters of the electric field may be captured. Accordingly, it is possible to generate an electrostatic force capable of efficiently capturing the charged particle aggregates.

8. <Modification Example of Present Technology>

The air purification system and the air purification method according to the present technology can be variously modified.

For example, the air purification system 10 according to the first embodiment may include the pre-filter 600 in front of the acoustic aggregation device 100 (on an upstream side of a flow path of an airflow af).

For example, the air purification system 20 according to the second embodiment may not have at least one of the pre-filter 600 and the main filter 300. Even in this case, acoustic parameters of the acoustic aggregation device 100, charging parameters of the charging unit 220, electric field parameters of the electric field generator 230, and the like can be adjusted (preferably optimized) to sufficiently capture particles to be captured and adsorb a gas.

For example, the aggregate capturing device 200 may be a fibrous electrostatic filter (fibrous filter charged with static electricity).

For example, the aggregate capturing device 200 may be an electric dust collector which charges particle aggregates in the airflow af using a corona discharge and captures them with an electrostatic force due to a high voltage electric field.

In the electric dust collector, as an example, a dust collecting electrode consisting of a flat conductor and a discharge electrode consisting of a thin conductor are arranged opposite to each other, and a DC high voltage is applied between both electrodes with the dust collecting electrode as a positive potential and the discharge electrode as a negative potential. At this time, the electric field on the surface of the discharge electrode becomes strong. In this state, if an airflow is allowed to flow between both electrodes, a corona discharge will occur near the surface of the discharge electrode. Accordingly, the majority between both electrodes is filled with negative charges, and particles in the airflow passing between both electrodes are negatively charged and accumulate at the dust collecting electrode.

The electric dust collector has a low pressure loss and a high dust collecting ability, but it is difficult to reduce the cost.

For example, the device equipped with a particle capturing system represented by the air purification system 10 and/or the air purification system 20 may be an audio device with an air cleaning function, an audio device with an air conditioning function, and an audio device with a refrigerating function. In this case, it is possible to use a sound wave transmission unit including, for example, a speaker of the audio device for acoustic aggregation.

As described above, the air purification system and the air purification method have been described as application examples of the particle capturing system and the particle capturing method according to the present technology, but the particle capturing system and the particle capturing method according to the present technology can also be applied to other applications. Examples of other applications include: an application for removing impurities (particles) to increase the purity of a specific gas in, for example, a manufacturing process of a product; and an application for collecting specific substances (particles) existing in a trace amount in a gas.

That is, the particle capturing system and the particle capturing method according to the present technology can be used for all purposes of capturing particles in a gas phase.

For example, in the air purification system as the above-described application example, particles in an airflow having a flow in a gas (for example, air) in a gas phase are considered as particles to be captured. However, particles in a gas phase can be considered as particles to be captured regardless of the presence or absence of the flow of a gas (for example, air).

As a specific example, in one chamber, particles in a gas phase may be acoustically aggregated using an acoustic aggregation device, and the obtained particle aggregates may be charged by an aggregate capturing device (for example, the above-described electric dust collector) to capture them with an electrostatic force.

In addition, the present technology can also have the following configurations.

(1) A particle capturing system including: an acoustic aggregation device that aggregates particles to be captured in a gas phase by applying sound waves to the particles to be captured; and an aggregate capturing device that charges particle aggregates obtained by aggregating the particles to be captured in the gas phase and captures the particle aggregates with an electrostatic force.

(2) The particle capturing system according to (1), in which the aggregate capturing device includes a charging unit that charges the particle aggregates in the gas phase; and an electric field generator that generates an electric field that changes an orbital of the charged particle aggregates in the gas phase.

(3) The particle capturing system according to (1) or (2), further including: a pre-filter that captures particles larger than the particles to be captured in the gas phase before the sound waves are applied to the particles to be captured.

(4) The particle capturing system according to any one of (1) to (3), further including: a rear-stage filter that captures particles in the gas phase which have not been captured by the aggregate capturing device.

(5) The particle capturing system according to any one of (1) to (4), further including: a particle size measurement device that measures a size of the particles to be captured in the gas phase; and a control device that controls acoustic parameters of the acoustic aggregation device based on a measurement result in the particle size measurement device.

(6) The particle capturing system according to any one of (1) to (5), further including: an aggregate size measurement device that measures a size of the particle aggregates in the gas phase; and a control device that controls charging parameters of the aggregate capturing device based on a measurement result in the aggregate size measurement device.

(7) The particle capturing system according to any one of (1) to (6), further including: an aggregate size measurement device that measures a size of the particle aggregates in the gas phase; and a control device that controls an electric field generated by the aggregate capturing device based on a measurement result in the aggregate size measurement device.

(8) The particle capturing system according to any one of (1) to (7), in which the acoustic aggregation device includes a chamber; and a sound wave transmission unit that transmits sound waves to the particles to be captured in the gas phase in the chamber.

(9) The particle capturing system according to any one of (1) to (8), in which the particles to be captured are any one of particles obtained by aggregating volatile organic compounds, particles obtained by aggregating semi-volatile organic compounds, and nanoparticles.

(10) The particle capturing system according to (3), in which the pre-filter is a porous filter.

(11) The particle capturing system according to (3), in which the pre-filter is a filter containing a porous material.

(12) The particle capturing system according to (3), in which the pre-filter is a fibrous filter.

(13) The particle capturing system according to (4), in which the rear-stage filter is a filter containing a porous material.

(14) The particle capturing system according to (4), in which the rear-stage filter is an activated carbon filter.

(15) A device including: the particle capturing system according to any one of (1) to (14).

(16) A particle capturing method including: a step of acoustically aggregating particles to be captured in a gas phase; a step of charging particle aggregates obtained by aggregating the particles to be captured in the gas phase; and a step of capturing the charged particle aggregates in the gas phase with an electrostatic force.

(17) The particle capturing method according to (16), in which the capturing step with the electrostatic force includes a step of charging the particle aggregates in the gas phase, and a step of generating an electric field that changes an orbital of the charged particle aggregates in the gas phase.

(18) The particle capturing method according to (16) or (17), further including: a step of capturing particles larger than the particles to be captured in the gas phase before the acoustic aggregation step.

(19) The particle capturing method according to any one of (16) to (18), further including: a step of capturing particles other than the particle aggregates in the gas phase after the capturing step with the electrostatic force.

(20) The particle capturing method according to any one of (16) to (19), further including: before the acoustic aggregation step, a step of measuring a size of the particles in the gas phase; and a step of adjusting acoustic parameters of the acoustic aggregation based on a measurement result in the measurement step, in which, in the acoustic aggregation step, the acoustic aggregation is performed with the adjusted acoustic parameters.

(21) The particle capturing method according to any one of (16) to (20), further including: before the charging step, a step of measuring a size of the particle aggregates in the gas phase; and a step of adjusting charging parameters of the charging based on a measurement result in the measurement step, in which, in the charging step, the charging is performed with the adjusted charging parameters.

(22) The particle capturing method according to claim 16, further including:
before the charging step, a step of measuring a size of the particle aggregates in the gas phase; and a step of adjusting parameters of an electric field in which the electrostatic force is generated, based on a measurement result in the measurement step, in which, in the capturing step with the electrostatic force, the particle aggregates charged with the adjusted parameters of the electric field are captured.

[Reference Signs List]

| | |
|---|---|
| 10, 20 | Air purification system |
| 100 | Acoustic aggregation device |
| 100a | First chamber (chamber) |
| 100b | Sound wave transmission unit |
| 200 | Aggregate capturing device |
| 220 | Charging unit |
| 230 | Electric field generator |
| 300 | Main filter (rear-stage filter) |
| 600 | Pre-filter |
| 500, 900 | Control device |
| 700 | Particle size measurement device |
| 800 | Aggregate size measurement device |

**Claims**

1. A particle capturing system comprising:

    an acoustic aggregation device that aggregates particles to be captured in a gas phase by applying sound waves to the particles to be captured; and
    an aggregate capturing device that charges particle aggregates obtained by aggregating the particles to be captured in the gas phase and captures the particle aggregates with an electrostatic force.

2. The particle capturing system according to claim 1,

    wherein the aggregate capturing device includes
    a charging unit that charges the particle aggregates in the gas phase, and
    an electric field generator that generates an electric field that changes an orbital of the charged particle aggregates in the gas phase.

3. The particle capturing system according to claim 1, further comprising:
a pre-filter that captures particles larger than the particles to be captured in the gas phase before the sound waves are applied to the particles to be captured.

4. The particle capturing system according to claim 1, further comprising:
a rear-stage filter that captures particles in the gas phase which have not been captured by the aggregate capturing device.

5. The particle capturing system according to claim 1, further comprising:

   a particle size measurement device that measures a size of the particles to be captured in the gas phase; and
   a control device that controls acoustic parameters of the acoustic aggregation device based on a measurement result in the particle size measurement device.

6. The particle capturing system according to claim 1, further comprising:

   an aggregate size measurement device that measures a size of the particle aggregates in the gas phase; and
   a control device that controls charging parameters of the aggregate capturing device based on a measurement result in the aggregate size measurement device.

7. The particle capturing system according to claim 1, further comprising:

   an aggregate size measurement device that measures a size of the particle aggregates in the gas phase; and
   a control device that controls parameters of an electric field generated by the aggregate capturing device based on a measurement result in the aggregate size measurement device.

8. The particle capturing system according to claim 1,

   wherein the acoustic aggregation device includes
   a chamber, and
   a sound wave transmission unit that transmits sound waves to the particles to be captured in the gas phase in the chamber.

9. The particle capturing system according to claim 1, wherein the particles to be captured are any one of particles obtained by aggregating volatile organic compounds, particles obtained by aggregating semi-volatile organic compounds, and nanoparticles.

10. The particle capturing system according to claim 3, wherein the pre-filter is a porous filter.

11. The particle capturing system according to claim 3, wherein the pre-filter is a filter containing a porous material.

12. The particle capturing system according to claim 3, wherein the pre-filter is a fibrous filter.

13. The particle capturing system according to claim 4, wherein the rear-stage filter is a filter containing a porous material.

14. The particle capturing system according to claim 4, wherein the rear-stage filter is an activated carbon filter.

15. A device comprising:
the particle capturing system according to claim 1.

16. A particle capturing method comprising:

   a step of acoustically aggregating particles to be captured in a gas phase;
   a step of charging particle aggregates obtained by aggregating the particles to be captured in the gas phase; and
   a step of capturing the charged particle aggregates in the gas phase with an electrostatic force.

17. The particle capturing method according to claim 16,

   wherein the capturing step with the electrostatic force includes a step of charging the particle aggregates in the gas phase, and
   a step of generating an electric field that changes an orbital of the charged particle aggregates in the gas phase.

18. The particle capturing method according to claim 16, further comprising:
a step of capturing particles larger than the particles to be captured in the gas phase before the acoustic aggregation step.

19. The particle capturing method according to claim 16, further comprising:
a step of capturing particles other than the particle aggregates in the gas phase after the capturing step with the electrostatic force.

20. The particle capturing method according to claim 16, further comprising: before the acoustic aggregation step,

a step of measuring a size of the particles in the gas phase; and

a step of adjusting acoustic parameters of the acoustic aggregation based on a measurement result in the measurement step,

wherein, in the acoustic aggregation step, the acoustic aggregation is performed with the adjusted acoustic parameters.

21. The particle capturing method according to claim 16, further comprising: before the charging step,

a step of measuring a size of the particle aggregates in the gas phase; and

a step of adjusting charging parameters of the charging based on a measurement result in the measurement step,

wherein, in the charging step, the charging is performed with the adjusted charging parameters.

22. The particle capturing method according to claim 16, further comprising: before the charging step,

a step of measuring a size of the particle aggregates in the gas phase; and

a step of adjusting parameters of an electric field in which the electrostatic force is generated, based on a measurement result in the measurement step, wherein, in the capturing step with the electrostatic force, the particle aggregates charged with the adjusted parameters of the electric field are captured.

Fig. 1

Fig. 2

500

CONTROL DEVICE

ACOUSTIC
AGGREGATION
DEVICE

CHARGING
UNIT

ELECTRIC
FIELD
GENERATOR

AGGREGATE
CAPTURING DEVICE

220

200

230

100

Fig. 3

Fig. 4

```
                    ┌─────────────┐
                    │    START    │
                    └──────┬──────┘
                           ▼
              ┌───▶      ╱HAS╲
              │        ╱AIRFLOW╲
              │      ◄ STARTED  ►────── S 1
              │      ╲ TO FLOW ╱
           NO │        ╲ IN? ╱
              │          ╲╱
              │           │ Y E S
              │           ▼
              │  ┌──────────────────────────────┐
              │  │ ACOUSTICALLY AGGREGATE PARTICLES │── S 2
              │  │   TO BE CAPTURED IN AIRFLOW   │
              │  └───────────────┬──────────────┘
              │                  ▼
              │  ┌──────────────────────────────┐
              │  │ CHARGE PARTICLE AGGREGATE IN AIRFLOW │── S 3
              │  └───────────────┬──────────────┘
              │                  ▼
              │  ┌──────────────────────────────┐
              │  │ CAPTURE CHARGED PARTICLE AGGREGATE │── S 4
              │  │ IN AIRFLOW WITH ELECTROSTATIC FORCE │
              │  └───────────────┬──────────────┘
              │                  ▼
              │  ┌──────────────────────────────┐
              │  │  CAPTURE RESIDUAL PARTICLES   │── S 5
              │  │     AND GAS IN AIRFLOW        │
              │  └───────────────┬──────────────┘
              │                  ▼
              │              ╱  HAS  ╲
              │            ╱ INFLOW  ╲
              └──────────◄ OF AIRFLOW ►────── S 6
                     NO   ╲ STOPPED? ╱
                           ╲        ╱
                            ╲      ╱
                              │ Y E S
                              ▼
                    ┌─────────────┐
                    │     END     │
                    └─────────────┘
```

Fig. 5

Fig. 6

Fig. 7

A

PRESSURE LOSS (Pa)

B

PRESSURE LOSS (Pa)

Fig. 8

A

B

Fig. 9

A

B

Fig. 10

| PARTICLE SIZE MEASUREMENT DEVICE | | AGGREGATE SIZE MEASUREMENT DEVICE |
|---|---|---|

700

800

900

900a

900b

900c

CONTROL DEVICE

| ACOUSTIC PARAMETER CONTROL UNIT | CHARGING PARAMETER CONTROL UNIT | ELECTRIC FIELD PARAMETER CONTROL UNIT |
|---|---|---|

ACOUSTIC AGGREGATION DEVICE

| CHARGING UNIT | ELECTRIC FIELD GENERATOR |
|---|---|

AGGREGATE CAPTURING DEVICE

220

200

230

100

Fig. 11

```
                    ┌─────────────┐
                    │    START    │
                    └──────┬──────┘
                           │
        ┌──────────────────▼──────┐
        │            ◇ HAS         │
        │         AIRFLOW          │ ─── S11
        │       STARTED TO         │
    NO  │         FLOW IN?         │
        └──────────────────────────┘
                      │ YES
           ┌──────────▼──────────┐
           │ CAPTURE RELATIVELY  │ ─── S12
           │   LARGE PARTICLES   │
           │     IN AIRFLOW      │
           └──────────┬──────────┘
           ┌──────────▼──────────┐
           │   MEASURE SIZE OF   │ ─── S13
           │      PARTICLES      │
           │     IN AIRFLOW      │
           └──────────┬──────────┘
        ┌─────────────▼─────────────┐
        │   SET ACOUSTIC PARAMETERS │ ─── S14
        │ BASED ON TARGET PARTICLE SIZE │
        └─────────────┬─────────────┘
        ┌─────────────▼─────────────┐
        │   ACOUSTICALLY AGGREGATE   │ ─── S15
        │ PARTICLES IN AIRFLOW WITH SET │
        │    ACOUSTIC PARAMETERS     │
        └─────────────┬─────────────┘
        ┌─────────────▼─────────────┐
        │  MEASURE SIZE OF PARTICLE  │ ─── S16
        │   AGGREGATES IN AIRFLOW    │
        └─────────────┬─────────────┘
        ┌─────────────▼─────────────┐
        │  SET CHARGING PARAMETERS   │ ─── S17
        │      BASED ON TARGET       │
        │      AGGREGATE SIZE        │
        └─────────────┬─────────────┘
        ┌─────────────▼─────────────┐
        │ SET ELECTRIC FIELD PARAMETERS │ ─── S18
        │      BASED ON TARGET       │
        │      AGGREGATE SIZE        │
        └─────────────┬─────────────┘
        ┌─────────────▼─────────────┐
        │ CHARGE PARTICLE AGGREGATES │ ─── S19
        │      IN AIRFLOW WITH SET   │
        │    CHARGING PARAMETERS     │
        └─────────────┬─────────────┘
      ┌───────────────▼───────────────┐
      │ CAPTURE CHARGED PARTICLE AGGREGATES IN │ ─── S20
      │   AIRFLOW WITH SET ELECTRIC FIELD     │
      │ PARAMETERS WITH ELECTROSTATIC FORCE   │
      └───────────────┬───────────────┘
           ┌──────────▼──────────┐
           │ CAPTURE RESIDUAL PARTICLES │ ─── S21
           │     AND GAS IN AIRFLOW     │
           └──────────┬──────────┘
        ┌─────────────▼─────────────┐
        │        ◇ HAS INFLOW        │ ─── S22
        │        OF AIRFLOW          │
    NO  │         STOPPED?          │
        └─────────────┬─────────────┘
                      │ YES
                ┌─────▼─────┐
                │    END    │
                └───────────┘
```

Fig. 12

<table>
<tr><td colspan="2" align="center">**INTERNATIONAL SEARCH REPORT**</td><td>International application No.</td></tr>
<tr><td colspan="2"></td><td>PCT/JP2021/001227</td></tr>
</table>

| A. CLASSIFICATION OF SUBJECT MATTER |
| --- |
| Int.Cl. B03C3/016(2006.01)i, B01D50/00(2006.01)i, B01D51/08(2006.01)i, B03C3/00(2006.01)i, B03C3/011(2006.01)i, B03C3/019(2006.01)i, B03C3/155(2006.01)i |
| FI: B03C3/016, B01D50/00501A, B01D50/00501Q, B01D51/08, B03C3/00J, B03C3/011, B03C3/019, B03C3/155A |
| According to International Patent Classification (IPC) or to both national classification and IPC |

| B. FIELDS SEARCHED |
| --- |
| Minimum documentation searched (classification system followed by classification symbols)<br>Int.Cl. B03C3/00-11/00, B01D50/00-51/10 |
| Documentation searched other than minimum documentation to the extent that such documents are included in the fields searched<br>    Published examined utility model applications of Japan     1922-1996<br>    Published unexamined utility model applications of Japan   1971-2021<br>    Registered utility model specifications of Japan        1996-2021<br>    Published registered utility model applications of Japan    1994-2021 |
| Electronic data base consulted during the international search (name of data base and, where practicable, search terms used) |

| C. DOCUMENTS CONSIDERED TO BE RELEVANT |

| Category* | Citation of document, with indication, where appropriate, of the relevant passages | Relevant to claim No. |
| --- | --- | --- |
| X<br>Y | JP 48-057279 A (SANYO ELECTRIC CO., LTD.) 11 August 1973 (1973-08-11), claims, detailed description of the invention, fig. 1 | 1-4, 8-19<br>5-7, 20-22 |
| X<br>Y | KR 10-2018-0045269 A (KOREA INSTITUTE OF MACHINERY AND MATERIALS) 04 May 2018 (2018-05-04), claims, paragraphs [0030]-[0070], fig. 1-11 | 1-4, 8-19<br>5-7, 20-22 |

☒ Further documents are listed in the continuation of Box C.    ☒ See patent family annex.

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    09 March 2021 | Date of mailing of the international search report<br>    16 March 2021 |
| --- | --- |
| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

| | **INTERNATIONAL SEARCH REPORT** | International application No. |
|---|---|---|
| | | PCT/JP2021/001227 |

C (Continuation).   DOCUMENTS CONSIDERED TO BE RELEVANT

| Category* | Citation of document, with indication, where appropriate, of the relevant passages | Relevant to claim No. |
|---|---|---|
| X | Microfilm of the specification and drawings | 1-4, 8-19 |
| Y | annexed to the request of Japanese Utility Model | 5-7, 20-22 |
| | Application No. 104099/1976 (Laid-open No. | |
| | 022275/1978) (METALLGESELLSCHAFT | |
| | AKTIENGESELLSCHAFT) 24 February 1978 (1978-02-24), | |
| | claims, detailed description of the device, fig. 1 | |
| | | |
| Y | JP 2011-143378 A (PANASONIC CORPORATION) 28 July | 5-7, 20-22 |
| | 2011 (2011-07-28), claims, paragraph [0043], fig. | |
| | 6 | |

Form PCT/ISA/210 (second sheet) (January 2015)

**INTERNATIONAL SEARCH REPORT**
Information on patent family members

| International application No. |
| --- |
| PCT/JP2021/001227 |

| | | |
| --- | --- | --- |
| JP 48-057279 A | 11 August 1973 | (Family: none) |
| KR 10-2018-0045269 A | 04 May 2018 | (Family: none) |
| JP 53-022275 U1 | 24 February 1978 | (Family: none) |
| JP 2011-143378 A | 28 July 2011 | (Family: none) |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016002545 A